# EUROPEAN PATENT SPECIFICATION

(11) **EP 2 527 216 B1**
(45) Date of publication and mention of the grant of the patent: **20.04.2016**
(21) Application number: 12004009.2
(22) Date of filing: 23.05.2012
(51) Int. Cl.: B60S 3/04, B60S 3/00

(54) **Drying device for a wheel washing machine**
Trockenvorrichtung für eine Radwaschmaschine
Dispositif de séchage destiné à une machine à laver pour roues

(30) Priority: 23.05.2011 IT MO20110125
(43) Date of publication of application: 28.11.2012
(73) Proprietor: TECO S.R.L., 42015 Correggio (RE) (IT)
(72) Inventor: Barbetti, Mauro, 42015 Correggio (Regio Emilia) (IT); Barbetti, Michele, 42015 Correggio (Reggio Emilia) (IT); Pellacani, Gianfranco, 42015 Correggio (Reggio Emilia) (IT); Iotti, Roberto, 42015 Correggio (Reggio Emilia) (IT)
(74) Representative: Bergamini, Silvio

(56) References cited:
- EP-A1- 0 338 509
- WO-A1-90/11210
- DE-A1- 19 542 855
- US-A1- 2008 041 426

## Description

### Field of the invention

The invention relates to a drying device for a wheel washing machine, particularly for vehicle wheels.

### Background art

The machines that have been long known and used for washing wheels, particularly vehicle wheels, which are usually called wheel washers, have a number of drying nozzles in their washing chamber, which are generally mounted integrally with the spraying devices that are used to spray the wheels with the washing liquid contained in a reservoir forming the base of the machine.

These drying devices are mounted to both sides of the washing area in which a wheel to be washed can be placed in a standing position, and each comprises a compressed-air manifold, which is fed by a compressor device and has a substantially cylindrical body.

Each of the cylindrical bodies, generally disposed in a vertical position, has ejector nozzles mounted thereto, which are oriented in fan-like arrangements, facing toward a respective face of a wheel to be dried after being washed.

It should be noted that the washing and drying steps are carried out with the wheel moving in the washing chamber, i.e. with the wheel turning about its axis of rotation, driven by one of the rollers upon which it normally stands in the washing chamber, which roller is rotatably driven by a motor unit, with the other roller being idle.

Therefore, the drying air flows impinge upon both faces of the wheel on both sides as the wheel rotates, and progressively dry it.

EP A 0338509 shows the preamble of claim 1.

Nevertheless, this prior art suffers from certain drawbacks.

A first drawback is that the fan arrangement of the drying air flows are dispersed in the washing chamber and impinge upon the wheels in an approximate fashion, with ineffective angles of incidence.

For this reason, each wheel to be dried may be required to cover a large number of rotation cycles to be fully dried.

Another drawback is that the wheels having a rim structure with radial spokes cannot be dried in any part, especially at the areas oriented tangent to the directions of the air flows, the latter flowing over them without being able to dry away the residual washing liquid.

For instance, these areas are the spoke portions arranged substantially parallel to the axis of rotation of the wheel and extending towards the interior of the rim.

A further drawback is that the orientation of the drying air jets and, as a result, of the air flows, is generally directed toward a high middle portion of the wheel, which may cause residual dripping on wheel portions that rotate across the area underlying the central area in which the air flows are ejected, whereby these areas will be damped again even when they have been dried and will require additional runs of the wheel between the air jets.

Another drawback of the prior art is that the effectiveness of air flows is considerably dependent on the diameters of the wheels to be dried, because the flows impinge upon wheel areas having variable, non-concentrated sizes.

A further drawback is that prior art drying devices have standard sizes, irrespective of whether they are designed to dry substantially flat outer surfaces or variably shaped inner surfaces of wheels.

### Objects of the invention

One object of the invention is to improve the prior art.

Another object of the invention is to provide a drying device for a wheel washing machine that allows the drying air flows to be concentrated over a predetermined drying plane, and to be ejected in directions inclined to the surfaces to be dried.

In one aspect the invention relates to a drying device for a wheel washing machine, as defined by the characteristics of claim 1.

Therefore, the invention affords the following advantages:
orienting the drying air flows in a predetermined direction;
thoroughly removing the washing liquid from the wheel surfaces, even from those surfaces that, due to the wheel structure, are substantially parallel to the axis of rotation of the wheel;
drying wheels of any size with the same drying capacity, regardless of their diameters;
drying outer and inner surfaces of wheels using air flows proportionally to the sizes of the surfaces to be dried.

### Brief description of the drawings

Further characteristics and advantages of the invention will be more apparent upon reading of the description of an embodiment of a drying device for a wheel washing machine, which is illustrated by way of example and without limitation in the annexed drawings, in which:
Figure 1 is a view of a traditional wheel washing machine;
Figure 2 is a broken-away and perspective detail view of a prior art drying device;
Figure 3 is a schematic side view of the internal washing area of a wheel washing machine having a drying device of the invention, in an embodiment for drying the outer surfaces of a wheel;
Figure 4 is a schematic side view of the internal washing area of a wheel washing machine having a drying device of the invention, in an embodiment for drying the inner surfaces of a wheel;
FIG. 5 is a broken-away schematic top view of the area for receiving a wheel to be washed and dried in a wheel washing machine having the drying device of the invention;
Figure 6 is a side view of a first drying element for the inner surfaces of a wheel, according to the invention;
Figure 7 is a perspective bottom-up view of the first element of Figure 6;
Figure 8 is a longitudinal sectional view of the first element of Figure 6;
Figure 9 is a side view of a second drying element for the outer surfaces of a wheel, according to the invention;
Figure 10 is a perspective bottom-up view of the second element of Figure 9;
Figure 11 is a longitudinal sectional view of the first element of Figure 9;

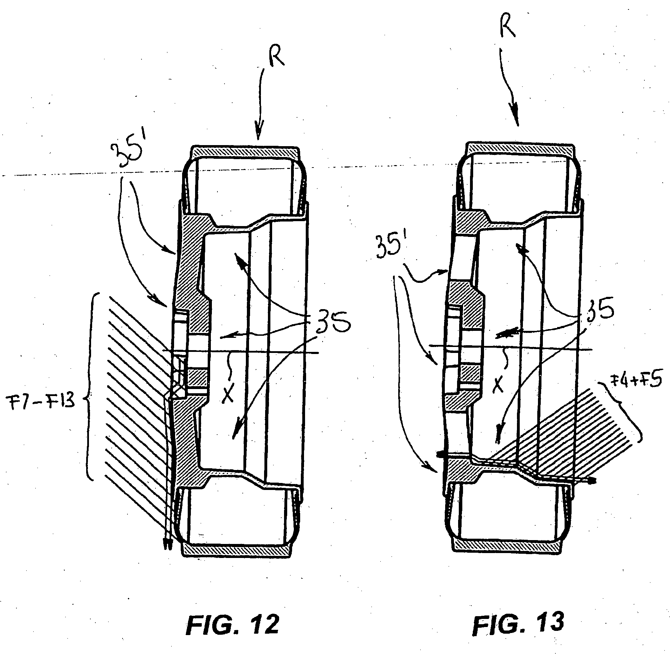

Figure 12 is a schematic cross-sectional view of a wheel to be dried, which shows a drying air flow impinging upon an outer surface of the wheel;
Figure 13 is a schematic cross-sectional view of a wheel to be dried, which shows a drying air flow impinging upon an inner surface of the wheel.

### Detailed description of a preferred embodiment

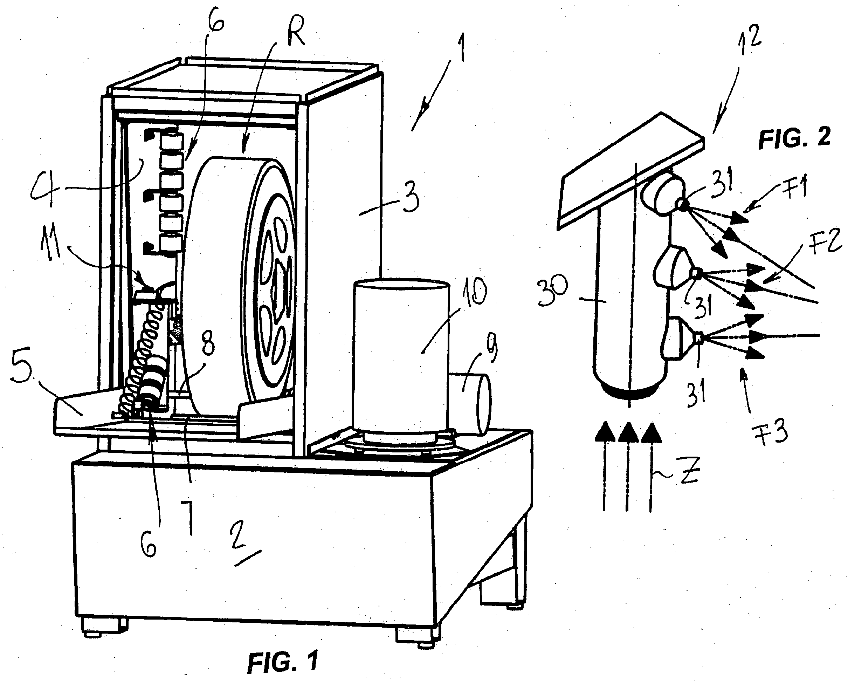

Referring to Figure 1, a wheel washing machine 1 is shown to comprise a base reservoir 2 containing a washing liquid "L" for washing wheels "R" that have a center axis and can be placed in a parallelepipedal casing 3 which is mounted above the reservoir 2 and defines a washing and drying chamber 4, that can be closed or opened with a door 5.

As shown in Figure 1, sets of idle rollers 6 are mounted to the walls in the chamber 4, and hold the wheel "R" in a vertical or substantially vertical position during the washing and drying steps.

The wheel "R" stands on two transverse support rollers 7 and 8, with the roller 7 being idle and the roller 8 being rotatably driven by a motor unit 9 mounted over the reservoir 2, the latter also having a pump 10 mounted thereto, for pumping the liquid "L" towards a set of spraying nozzles 11 arranged in the chamber 4 on both sides of the area for receiving the wheel "R" to be washed and dried.

Referring to Figure 2, a prior art drying device 12 is shown, which comprises a cylindrical manifold body 20 from which pressurized-air blowing nozzles extend outwards, which pressurized air is fed in the direction of arrows "Z" and is ejected in the directions of arrows "F1", "F2", "F3".

As shown in Figure 2, the directions are skew to one another, and hence have different orientations.

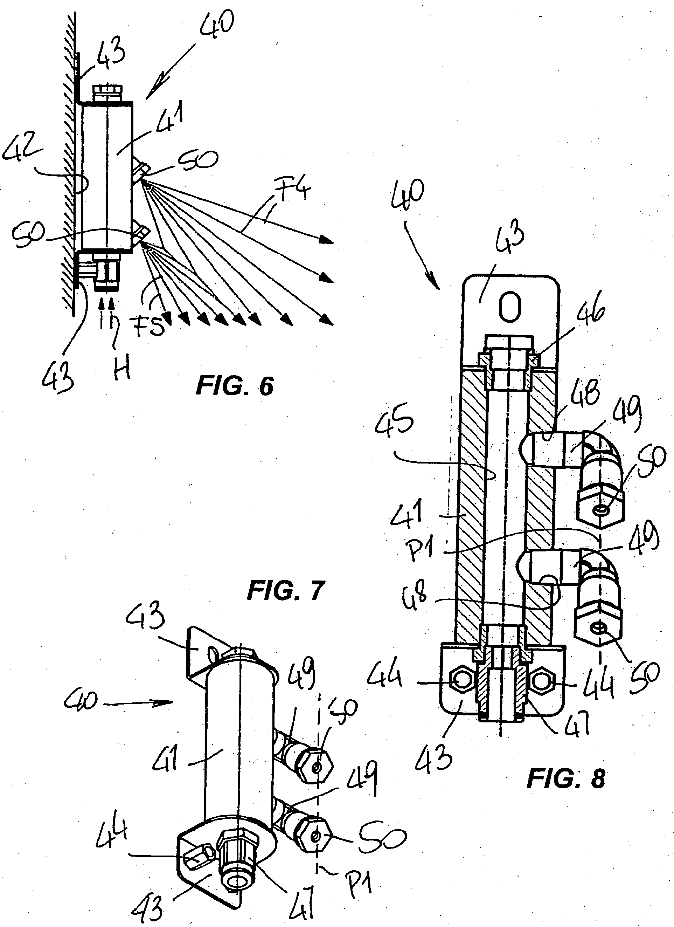

Referring to Figure 6, a first blowing element 40 of the drying device of the invention is shown, particularly for drying the inner surfaces of a wheel "R2", i.e. the surfaces of the area 35 thereof facing toward the vehicle when the wheel is mounted.

Here again, the first blowing element 40 comprises a cylindrical body 41, which may be attached to one of the side walls 42 of the washing chamber 4, e.g. by means of brackets 43 and bolts 44.

A conduit 45 axially extends through the cylindrical body 41 and is closed at a top end by a cap 46, and has a connector 47 at the opposite bottom end for a pipe that feeds pressurized-air in the direction of arrows "H", which pipe is not shown.

Referring to Figure 8, two side apertures 48 are shown in the body 41, with two axially hollow elbow fittings 49 being watertightly engaged therein, both terminating with respective blowing nozzles 50.

It shall be noted that both nozzles 50 are oriented in a common direction, lying on a common plane "P1", indicated in the figures by a broken line.

As shown in Figure 6, the arrows "F4" and "F5" designate the directions of the air flows blown by the nozzles 50, which are designed to dry the inner area 35 and hence are in a small number, namely two nozzles one above the other.

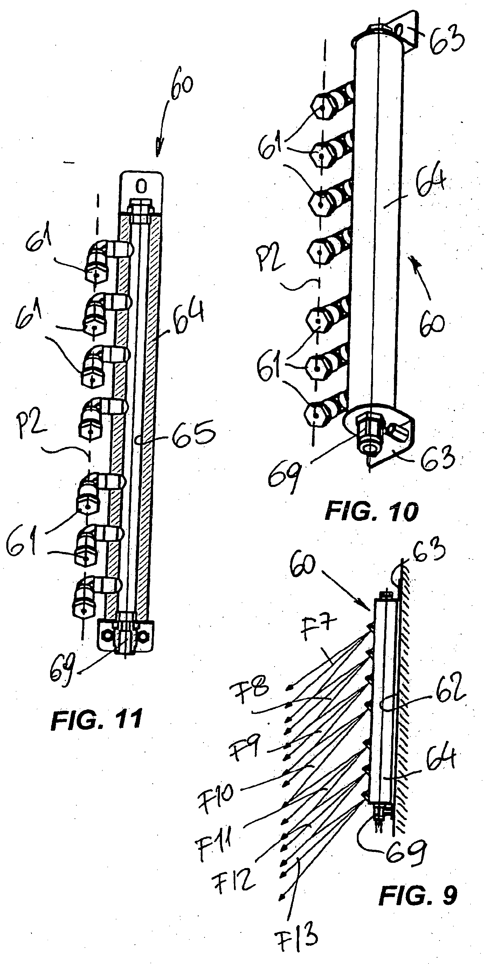

Referring to Figures 9 to 11, a second blowing element 60 is shown, which is designed to be attached to a wall 62 of the chamber 4, opposed and parallel to the wall 42 to which the first blowing element 40 is mounted, with brackets 63 identical to the brackets 43.

The structure of the second blowing element 60 is substantially similar to that of the first element 40, except that the blowing nozzles 61 are in a larger number, because they are designed to dry an area 35' of the wheel "R" that faces toward the exterior of a vehicle when the wheel is mounted.

More in detail, this second blowing element 60 is also shown to have a cylindrical body 64 with a conduit 65 axially extending therethrough, and with aligned apertures 66 formed on the body 64 for watertight engagement of elbow fittings 67 having the nozzles 61 at their respective free ends.

This second blowing element 60 also has the axial conduit closed at its top by a cap 68, whereas the bottom opening thereof has a connector 69 for a pressurized-air feeding pipe, not shown.

Figure 9 shows the directions of the pressurized-air, designated by arrows "F7" to "F13".

The blowing nozzles 61 of this second blowing element 60 are also aligned over a common plane "P2".

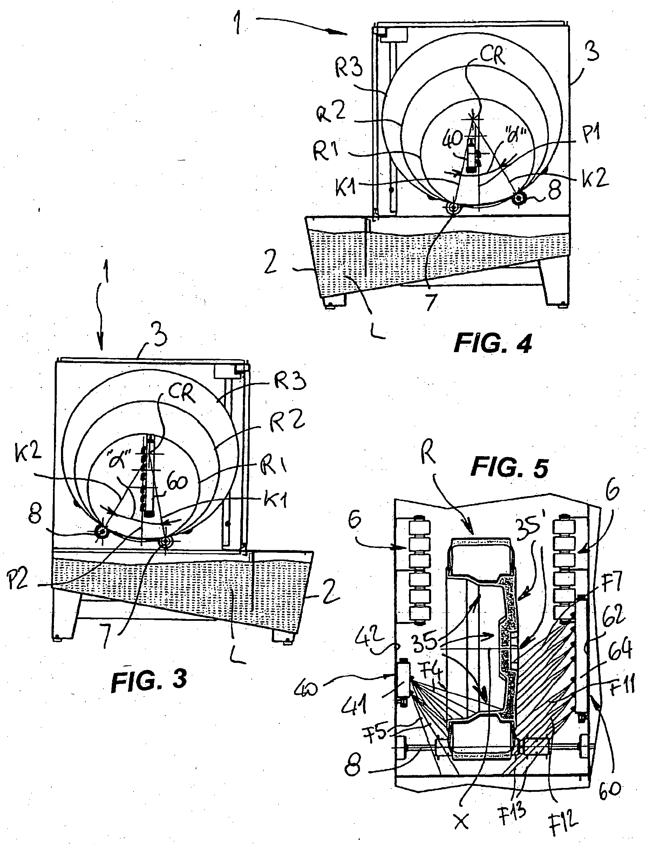

Referring to Figures 3 and 4, "R1", "R2", "R3" designate the circumferences of three different wheels "R" having different, progressively increasing diameters, among which the circumference "R3" designates the outer shape of the wheel "R" with the maximum diameter that can be introduced into the washing and drying chamber 4 of the wheel washing machine 1.

"k1" and "K2" designates two radiuses of the maximum-diameter circumference "R3", which join the center "CR" of the wheel "R" with the largest diameter to the centers of the rollers 7 and 9, and defined a sector "α" containing the planes "P1" and "P2" that ideally join the nozzles 50 and 61.

The operation of the drying device for a wheel washing machine is as follows: after introducing a wheel "R" to be washed and dried into the washing chamber 4 of the wheel washing machine 1 and completing the washing process as is known, by causing the wheel "R" to rotate in the washing chamber 4, the operator starts the drying process, by stopping the delivery of washing liquid "L" and starting a pressurized-air source, which simultaneously feeds the first blowing element 40 and the second blowing element 60.

Pressurized-air flows are blown from the nozzles 50 and 61 of these first and second blowing elements, and form two planar air sheets which transversely impinge upon the wheel "R" both in the inner area 35 and in the outer area 35', with an oblique direction of incidence, which progressively increases as it diverges from the center to the outer circumference of the wheel "R".

Such oblique direction of incidence allows all the areas of the wheel "R", even those that are parallel to the central axis of rotation "X" of the wheel "R", to be reached by the pressurized-air flows and allows the residues of the washing liquid "L" to be removed and pushed away from the wheel surfaces, by the components of the oblique direction of incidence perpendicular and tangent to the surfaces to be dried, and to fall into the underlying reservoir 2 of the wheel washing machine

The position of the two common planes "P1" and "P2" in the sector "α" defined by the two radiuses "K1" and "K2" ensures that the two pressurized-air flows that substantially form two opposed air sheets, will hit the wheels "R" to be dried in concentrated fashion, as the wheels rotate in the chamber 4, at least in an area defined between the center "CR" of a wheel "R" having the maximum diameter "R3" and the peripheral surface thereof, thereby completely pushing away the liquid "L" from it, without causing residual dripping, as the wheel "R" keeps on rotating.

The above disclosed invention was found to fulfill the intended objects.

The invention is susceptible to a number of changes and variants within the inventive concept.

In practice, any materials, shapes and sizes may be used as needed, without departure from the scope of the following claims.

## Claims

1. A drying device for a wheel (R) washing machine (1) comprising:
- A first blowing element (40) which can be fed by a drying fluid fed by a source and facing a first surface (35) of a wheel (R) to be dried;
- A second blowing element (60) which can be fed by a drying fluid and facing a second surface (35') of a wheel (R) to be dried, opposing said first surface (35);
**characterized in that**
- A first blowing nozzles group (50) is mounted on said first blowing element (40);
- A second blowing nozzles group (61) is mounted on said second blowing element (60), said first and second nozzles groups (50, 61) being aligned respectively on a first common aligning plane (P1) and on a second common aligning plane (P2) contained in a circular sector defined between two radii (K1, K2) of a wheel (R) to be dried having maximum diameter (R3), wherein said two radii comprise:
- a first radius (K1) connecting the centre (CR) of a wheel (R) having maximum diameter (R3) to a first resting roller (7) of said wheel (R) in a washing and drying chamber (4) of a wheels washing machine (1); and
- a second radius (K2) connecting a centred axis (X) of said wheel (R) having maximum diameter (R3) to a second resting and driving roll (8) of said wheel (R) in said washing and drying chamber (4).

2. A device according to claim 1, wherein said first and second blowing elements (40, 60) each comprises:
- and elongated body (41, 64) axially provided with respective feeding duct (45, 65) of said drying fluid;
- a plurality of blowing openings obtained longitudinally aligned on peripheral surface of said body (41, 64);
- oriented connecting elements (49) sealingly engaged into said openings;
- blowing nozzles (50, 61) mounted on the ends of said oriented connecting elements (49) turned outwardly and oriented according to said first common aligning plane (P1) and second common aligning plane (P2)

3. A device according to claim 1, wherein said first and second nozzles groups (50, 61) comprise different numbers of nozzles.

4. A device according to anyone of preceding claims, wherein said blowing nozzles (50, 61) blows drying fluid jets in a direction having at least a component centrifugally directed in respect with said central axis (X) of said wheel (R).

5. A wheel washing machine, **characterized in that** it comprises a drying device according one or more of preceding claims.

## Patentansprüche

1. Eine Trockenvorrichtung für eine Waschmaschine (1) für ein Rad (R) mit
- einem ersten Gebläseelement (40), das mittels einem Trocknungsfluid versorgt werden kann, das von einer Quelle zugeführt wird und das auf eine erste Oberfläche (35) eines zu trocknenden Rads (R) gerichtet ist,
- einem zweiten Gebläseelement (60), das mittels einem Trocknungsfluid versorgt werden kann und das auf eine der ersten Oberfläche (35) gegenüber liegende zweite Oberfläche (35') eines zu trocknenden Rads (R) gerichtet ist,
**dadurch gekennzeichnet, dass**
- eine erste Gebläsedüsengruppe (50) auf dem ersten Gebläseelement (40) montiert ist,
- eine zweite Gebläsedüsengruppe (61) auf dem zweiten Gebläseelement (60) montiert ist, wobei die ersten und zweiten Düsengruppen (50, 61) jeweils ausgerichtet sind auf einer ersten gemeinsamen Ausrichtebene (P1) und auf einer zweiten gemeinsamen Ausrichtebene (P2), die in einem kreisförmigen Bereich enthalten sind, der bestimmt ist zwischen zwei Radien (K1, K2) eines zu trocknenden Rads (R) mit maximalem Durchmesser (R3), wobei die zwei Radien
- einen ersten Radius (K1), der das Zentrum (CR) eines Rads (R) mit maximalem Durchmesser (R3) mit einer ersten Ablagerolle (7) des Rads (R) verbindet in einer Wasch- und Trockenkammer (4) eine Räderwaschmaschine (1), und
- einen zweiten Radius (K2), der eine zentrierte Achse (X) des Rads (R) mit maximalem Durchmesser (R3) mit einer zweiten Ablage- und Antriebsrolle (8) des Rads (R) verbindet in der Wasch- und Trockenkammer (4), enthalten.

2. Eine Vorrichtung gemäß Anspruch 1, **dadurch gekennzeichnet, dass** die ersten und zweiten Gebläseelemente (40, 60) jeder
- ein längliches Gehäuse (41, 64), das axial mit jeweiliger Zuführung (45, 65) für das Trocknungsfluid versehen ist,
- eine Vielzahl von Gebläseöffnungen, die longitudinal ausgerichtet auf Umfangsflächen des Gehäuses (41, 64) gegeben sind,
- gerichtete Verbindungselemente (49), die dichtend in diesen Öffnungen eingreifen,
- Gebläsedüsen (50, 61), die auf den Enden der gerichteten Verbindungselemente (49) nach außen gedreht und entsprechend der ersten gemeinsamen Ausrichtebene (P1) und zweiten gemeinsamen Ausrichtebene (P2) montiert sind, aufweisen.

3. Eine Vorrichtung gemäß Anspruch 1, **dadurch gekennzeichnet, dass** die ersten und zweiten Düsengruppen (50, 61) unterschiedliche Anzahlen von Düsen aufweisen.

4. Eine Vorrichtung gemäß einem der vorhergehenden Ansprüche, **dadurch gekennzeichnet, dass** die Gebläsedüsen (50, 61) Strahlen aus Trocknungsfluid in eine Richtung blasen, die mindestens eine Komponente hat, die zentrifugal gerichtet ist mit Bezug auf die zentrale Achse (X) des Rads (R).

5. Eine Radwaschmaschine, **dadurch gekennzeichnet, dass** eine Trockenvorrichtung gemäß einem oder mehreren der vorhergehenden Ansprüche vorgesehen ist.

## Revendications

1. Dispositif de séchage pour une machine (1) lave-roues (R), comprenant :
- un premier élément de soufflage (40) pouvant être alimenté en fluide de séchage provenant d'une source et faisant face à une première surface (35) d'une roue (R) à sécher ;
- un second élément de soufflage (60) pouvant être alimenté en fluide de séchage et faisant face à une seconde surface (35') d'une roue (R) à sécher, opposée à ladite première surface (35) ;
**caractérisé en ce que**
- un premier groupe de buses de soufflage (50) est monté sur ledit premier élément de soufflage (40) ;
- un second groupe de buses de soufflage (61) est monté sur ledit second élément de soufflage (60), lesdits premier et second groupes de buses (50, 61) étant alignés respectivement sur un premier plan d'alignement commun (P1) et sur un second plan d'alignement commun (P2) contenus dans un secteur circulaire défini entre deux rayons (K1, K2) d'une roue (R) à sécher ayant un diamètre maximum (R3), dans lequel lesdits deux rayons comprennent :
- un premier rayon (K1) reliant le centre (CR) d'une roue (R) ayant un diamètre maximum (R3) à un premier rouleau d'appui (7) de ladite roue (R) dans une chambre de lavage et de séchage (4) d'une machine lave-roues (1) ; et
- un second rayon (K2) reliant un axe central (X) de ladite roue (R) ayant un diamètre maximum (R3) à un second rouleau d'appui et d'entraînement (8) de ladite roue (R) dans ladite chambre de lavage et de séchage (4).

2. Dispositif selon la revendication 1, dans lequel lesdits premier et second éléments de soufflage (40, 60) comprennent chacun :
- un corps allongé (41, 64) pourvu, en direction axiale, d'un conduit respectif d'alimentation (45, 65) dudit fluide de séchage ;
- une pluralité d'ouvertures de soufflage, formées en position alignée longitudinalement sur la surface périphérique dudit corps (41, 64) ;
- des éléments orientés de raccordement (49) engagés à étanchéité dans lesdites ouvertures ;
- des buses de soufflage (50, 61) montés aux extrémités tournées vers l'extérieur desdits éléments orientés de raccordement (49) et orientés selon ledit premier plan d'alignement commun (P1) et le second plan d'alignement commun (P2).

3. Dispositif selon la revendication 1, dans lequel lesdits premier et second groupes de buses (50, 61) comprennent des nombres de buses différents.

4. Dispositif selon n'importe laquelle des revendications précédentes, dans lequel lesdites buses de soufflage (50, 61) soufflent des jets de fluide en une direction, ayant au moins une composante centrifuge par rapport audit axe central (X) de ladite roue (R).

5. Machine lave-roues **caractérisée en ce qu'**elle comprend un dispositif de séchage selon une ou plusieurs des revendications précédentes.
